# EUROPEAN PATENT APPLICATION

(11) **EP 4 831 687 A1**
(43) Date of publication of application: **28.10.2026**
(21) Application number: 25803397.6
(22) Date of filing: 22.04.2025
(51) Int. Cl.: G01S 13/90

(54) **SYNTHETIC APERTURE RADAR SYSTEM**

(30) Priority: 13.05.2024 JP 2024078250
(71) Applicant: Kiritani, Kotaro, Kawasaki-shi, Kanagawa, 215-0021 (JP)
(72) Inventor: Kiritani, Kotaro, Kawasaki-shi, Kanagawa, 215-0021 (JP)
(74) Representative: Lippert Stachow Patentanwälte Rechtsanwälte
(86) International application number: PCT/JP2025/015523
(87) International publication number: WO 2025/239147

(57) **Abstract**

Provided is a synthetic aperture radar system that can improve the spatial resolution of an observation point by repeating transmission, reflection, and reception of microwaves between a satellite and the observation point. In the synthetic aperture radar system, at the satellite, the radar signal generation device generates a radar signal at a predetermined timing, and the radar wave is generated based on the radar signal and emitted to the land surface. The radar wave reflected from the land surface is received at the satellite, amplified, re-emitted to the land surface, and re-reflected by the land surface. The radar wave reflected from the land surface is re-received at the satellite. Such a sequence is repeated multiple times, thereby the timing the radar signal is generated by the radar signal generation device is used, and image data about point scatterer on the land surface is generated based on the radar signal generated by the radar signal generation device and the radar signal that is based on the radar wave reflected from the land surface.

## Description

### [Technical Field]

The present invention relates to a synthetic aperture radar system.

### [Background Art]

Synthetic aperture radar satellites can acquire the land surface conditions over a wide area with a synthetic aperture radar (SAR) mounted on a satellite. The synthetic aperture technology is a technology to transmit microwaves from a radar antenna mounted on a satellite, receive backscattered waves from the ground along the orbit, re-synthesize these signals, and thereby obtain substantially the same resolution as in a case where an antenna having a larger aperture than the actually-mounted antenna would be used. Further, signals whose frequency changes with time called chirp signals are used in a direction (the range direction) orthogonal to the orbit forward direction, and thereby positions on the ground are identified. A bandwidth of such a chirp signal determines a correlation width, and this correlation width determines the resolution in the range direction. On the other hand, the resolution in the azimuth direction obtained by the synthetic aperture technology is determined by utilizing a change in the frequency due to a Doppler effect depending on the velocity of the satellite.

For example, Non-Patent Literature 1 listed below discloses a technology in which two moving units are moving on their orbits, a radar wave transmitted from one of the moving units and reflected from the ground is received by the other moving unit, and thereby a synthetic aperture radar image is generated.

### [Citation List]

### [Non Patent Literature]

[NPL 1] "Bistatic SAR System and Signal Processing Technology", Robert Wang, Yunkai Deg Springer, 2018

### [Summary of Invention]

### [Technical Problem]

As described above, the resolution of a synthetic aperture radar depends on a range of frequency changes in transmitted microwaves, namely, a so-called frequency bandwidth for both the azimuth direction and the range direction. In general, a bandwidth and resolution have a positive correlation, and to achieve a high resolution, it is required to increase the bandwidth.

However, a bandwidth in the range direction has a limitation defined by the Radio Law, and a bandwidth in the azimuth direction has a limitation due to a Doppler effect depending on the satellite's ground velocity, and therefore, in the current situation, the resolution is also constrained for the above factors.

Thus, there is a problem of inability of improving the resolution of synthetic aperture radars because bandwidths of microwaves used by synthetic aperture radar satellites are constrained by the satellite's ground velocity or the Radio Law.

The present invention has been made in view of such circumstances and intends to provide a synthetic aperture radar system that can equivalently expand the band of frequencies to improve the temporal resolution and thereby realize a high spatial resolution.

### [Solution to Problem]

A synthetic aperture radar system according to the present invention is a synthetic aperture radar system including: a radar signal generation device; a radar wave transmission unit; a radar wave receiving unit; a radar signal amplifying device; a radar signal mixing device; and a radar signal processing device in a moving unit. The synthetic aperture radar system includes: the radar signal generation device configured to generate a radar signal at a predetermined timing; the radar wave transmission unit configured to generate a radar wave based on the radar signal and irradiate a land surface with the generated radar wave from the moving unit; the radar wave receiving unit configured to receive the radar wave transmitted from the radar wave transmission unit and reflected from the land surface and convert the received radar wave into a radar signal; the radar signal amplifying device configured to amplify the converted radar signal; the radar signal mixing device configured to mix the signal amplified by the radar signal amplifying device and the radar signal generated by the radar signal generation device to generate a synthetic radar signal; and the radar signal processing device configured to generate image data related to a point scatterer on the land surface based on a further radar signal and the radar signal, which is generated by the radar signal generation device, the further radar signal being based on the radar wave reflected multiple time at the land surface. The radar wave transmission unit generates the radar wave based on the synthetic radar signal generated by the radar signal mixing device and irradiates the land surface with the generated radar wave.

According to the above configuration, the moving unit generates a radar wave from a generated radar signal and irradiates the land surface therewith. The moving unit receives a radar wave reflected from the land surface, amplifies the received radar wave, and re-irradiates the land surface therewith. Repetition of this operation expands the bandwidth equivalently. As a result, the temporal resolution is improved, and the resolution of images formed by using radar waves is improved.

### [Advantageous Effects of Invention]

According to the present invention, by equivalently expanding the band of frequencies of microwaves to be transmitted, it is possible to improve the temporal resolution and, as a result, improve the spatial resolution.

### [Brief Description of Drawings]

[Fig. 1]

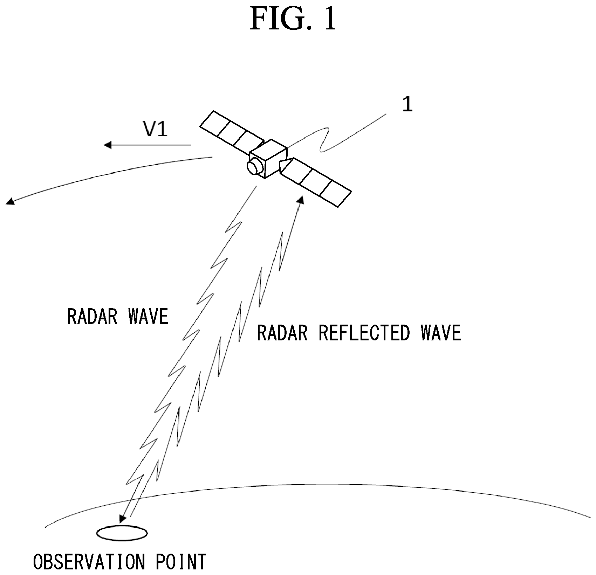

   Fig. 1 is an illustration diagram of a synthetic aperture radar system according to Example 1.
[Fig. 2]

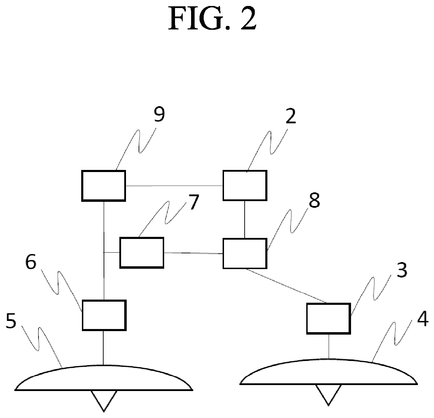

   Fig. 2 is an internal configuration diagram of a satellite according to Example 1.
[Fig. 3]

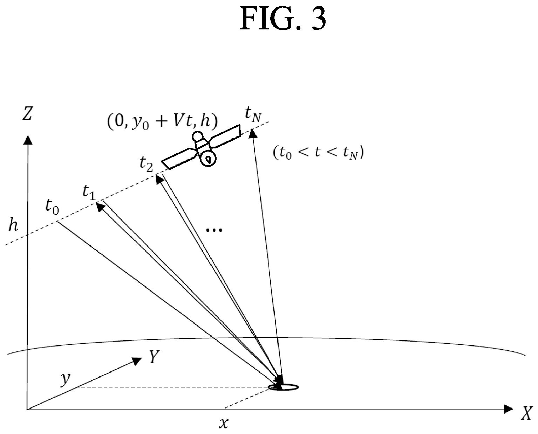

   Fig. 3 is an illustration diagram in which a radar wave according to Example 1 repeats reflection and turning back between the satellite and an observation point.
[Fig. 4]

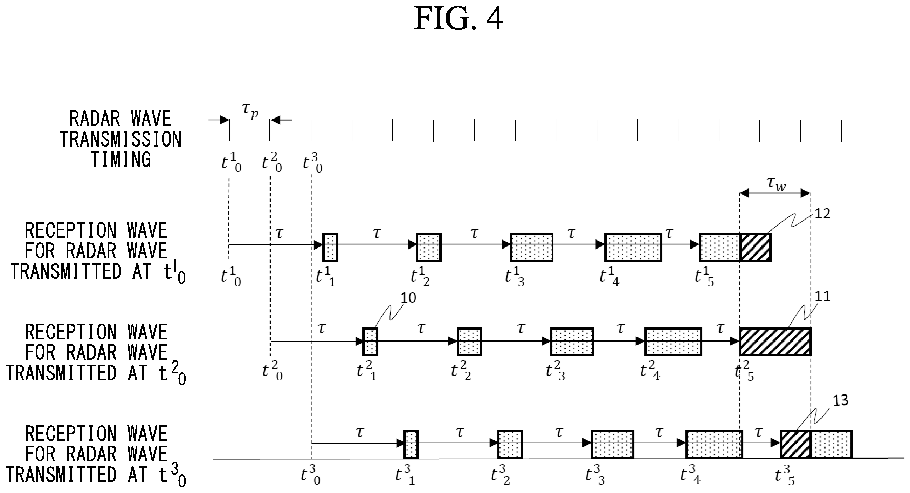

   Fig. 4 is a diagram illustrating the principle of the present invention by Example 1.
[Fig. 5]

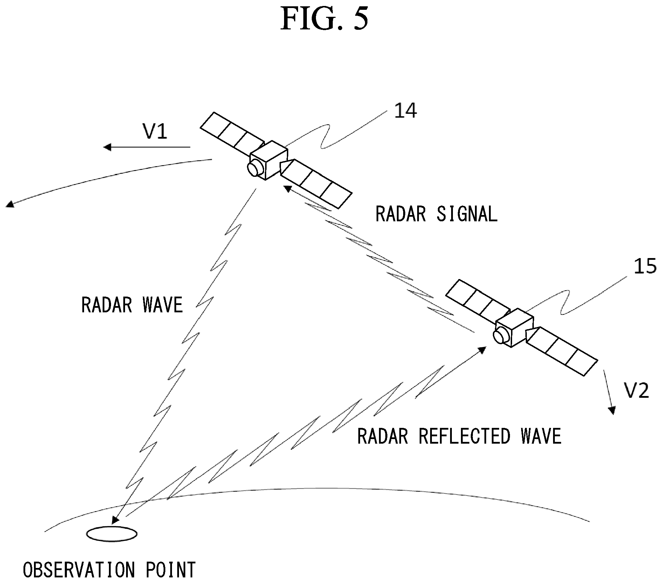

   Fig. 5 is an illustration diagram of a synthetic aperture radar system according to Example 2.
[Fig. 6]

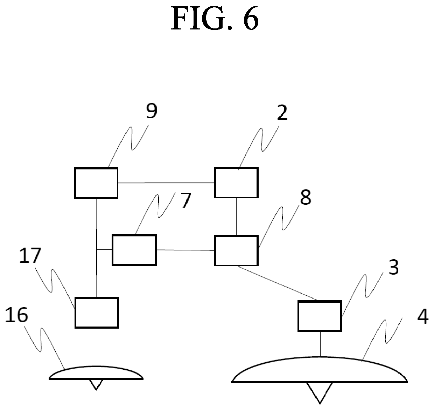

   Fig. 6 is an internal configuration diagram of a primary satellite according to Example 2.
[Fig. 7]

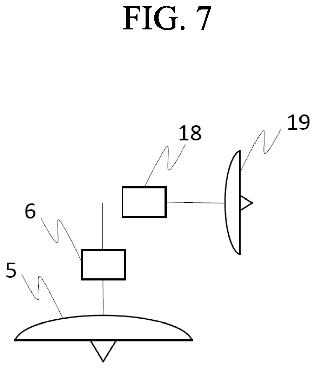

   Fig. 7 is a configuration diagram of internal of a secondary satellite according to Example 2.

### [Description of Embodiments]

A synthetic aperture radar system according to the embodiment of the present invention will be described below with reference to the drawings.

The synthetic aperture radar system according to the present embodiment repeats generating a radar signal at a satellite 1, generating a radar wave by using the radar signal, transmitting the radar wave, receiving a reflected wave from the land surface, and then re-amplifying and retransmitting the reflected wave, thereby the round-trip distance of the radar wave is increased, and a higher resolution is realized (Example 1).

### [Example 1]

Fig. 1 is an illustration diagram illustrating the overall synthetic aperture radar system using the satellite 1 according to Example 1 of the present embodiment. In Fig. 1, V₁ denotes the velocity of the satellite 1. Fig. 2 is an internal configuration diagram of the satellite 1, and the satellite 1 includes a radar signal generation device 2, a radar wave transmission device 3, a radar wave transmission antenna 4, a radar wave receiving antenna 5, a radar wave receiving device 6, a radar signal amplifying device 7, a radar signal mixing device 8, and the like. A radar wave transmission unit according to the present invention is formed of the radar wave transmission device 3 and the radar wave transmission antenna 4, and a radar wave receiving unit according to the present invention is formed of the radar wave receiving antenna 5 and the radar wave receiving device 6. Herein, a radar wave refers to, for example, a high-frequency, high-power microwave with which the land surface is irradiated, and a radar signal refers to a signal to modulate a radar wave.

The satellite 1 illustrated in Fig. 1 generates a radar signal by using a chirp signal generated at a predetermined timing by the radar signal generation device 2 illustrated in Fig. 2. From the generated radar signal, the radar wave transmission device 3 generates a radar wave to irradiate the land surface. The radar wave is transmitted from the radar wave transmission antenna 4. A change in the frequency occurs in the transmitted radar wave due to a Doppler effect.

The radar wave transmitted from the radar wave transmission antenna 4 is reflected at an observation point (on the ground) and received by the radar wave receiving antenna 5 of the satellite 1. A change in the frequency due to a Doppler effect occurs at this time, the time of transmission, and also the time of reception. This change is the same as that in the typical SAR observation. The received radar wave is down-converted by the radar wave receiving device 6, and a radar signal after reflected from the ground is extracted. The extracted radar signal is amplified by the radar signal amplifying device 7. At the radar signal mixing device 8, the amplified radar signal is synthesized with the chirp signal of the radar signal generated by the radar signal generation device 2, and thereby the synthetic radar signal is generated. A radar wave up-converted by the radar wave transmission device 3 based on the synthetic radar signal and generated with a continuous phase is transmitted from the radar wave transmission antenna 4. Further, the radar signal processing device 9 extracts a component reflected a predetermined number of times by using a timing calculated based on the time the radar signal is generated by the radar signal generation device 2 from the radar signal extracted from the received radar wave, converts the component into two-dimensional data, and reconstructs an image by using a reference signal generated based on the converted two-dimensional data and the generated chirp signal. It is possible to perform this reconstruction process at the radar signal processing device 9 inside the satellite 1 and then transmit the result thereof to the ground, or otherwise it is possible to transmit the received data to the ground and then perform the reconstruction process. In the latter case, the radar signal processing device 9 is installed on the ground.

Further, in the above technology, a radar signal that is the baseband component is extracted from the received radar wave. The present embodiment is featured in repeatedly reflecting a radar signal while maintaining the phase thereof to increase the round-trip distance of the radar wave and thereby equivalently expanding the frequency bandwidth of a chirp signal forming the radar signal. Thus, it is also possible to directly amplify a received radar wave without extracting a radar signal, which is the baseband component, from a radar wave, mix the amplified radar wave with a radar wave generated by the radar wave transmission device 3 based on the radar signal output from the radar signal generation device 2, and transmit the mixed radar wave from the radar wave transmission antenna 4. Further, to amplify the received radar wave or the radar signal extracted from the received radar wave for retransmission, it is also possible to employ a method of sampling a radar wave or signal at a high rate and digitally processing the sampled radar wave or signal while maintaining phase information.

Note that the technical feature of the present embodiment is in the synthetic aperture radar system using a radar wave that has experienced multiple round-trips between a satellite and the ground, and the detailed description will be omitted for technologies that are common to typical synthetic aperture radars that performs signal processing in response to receiving a backscattered wave of a microwave with which the satellite irradiates the land surface.

The following describes that the round-trip distance of a radar wave is increased, the bandwidth is expanded, and the resolution is improved in accordance with the present embodiment.

First, it is known that, when the radar aperture length of the satellite 1 is D, the resolution will be D/2 for the azimuth direction in typical synthetic aperture radar satellites.

Fig. 3 illustrates a diagram illustrating the principle of the present invention with reference to Example 1. The present invention is featured in turning back a radar wave emitted to and reflected from an observation point to irradiate the same observation point multiple times with a radar wave that is continuous in terms of the phase. In the following description, the number of such repetitions is N. In the typical SAR technology, analysis is made assuming that the position of the satellite does not change from the time of transmission of a radar wave called "Stop and Go Model" to the time of reception of the reflected wave. In the present invention, however, because of the presence of N repetitions, it is required to consider a change in the position of the satellite from irradiation to reception of a radar wave. In this description, the time the radar wave is initially transmitted is t₀, and the time the radar wave is received at the satellite 1 immediately after i times of reflection is tᵢ. Note that tᵢ matches the time the i-th turned-back radar wave is transmitted at the satellite 1 for i = 1, 2, ..., N-1. Herein, the following equation is established:
[Math 1] ${l}_{i} = \sqrt{{x}^{2} + {\left(y-{y}_{0}-{Vt}_{i}\right)}^{2} + {h}^{2}} + \sqrt{{x}^{2} + {\left(y-{y}_{0}-{Vt}_{i + 1}\right)}^{2} + {h}^{2}}$ (1) where the velocity (y direction) of the satellite 1 is V, the height of the satellite 1 is h, the coordinates of the observation point are (x, y, 0), the position of the satellite 1 at time 0 is (0, y₀, h), and the round-trip distance of the radar wave from time tᵢ the radar wave is transmitted from the satellite 1 to time tᵢ₊₁ the radar wave is received is lᵢ. Therefore, after the satellite 1 has transmitted the radar wave at time t₀, the round-trip distance L of the radar wave when the radar wave is received at time t_{N} after reflection at the observation point and turning back at the satellite 1 are repeated N times and N-1 times, respectively, is:
[Math 2] $L = {\sum }_{i = 0}^{N - 1} {l}_{i} = {\sum }_{i = 0}^{N - 1} \left(\sqrt{{x}^{2} + {\left(y-{y}_{0}-{Vt}_{i}\right)}^{2} + {h}^{2}}+\sqrt{{x}^{2} + {\left(y-{y}_{0}-{Vt}_{i + 1}\right)}^{2} + {h}^{2}}\right)$ (2) At this time, the phase delay φ(t0) after the radar wave transmitted at time t₀ has been reflected N times is:
[Math 3] $ϕ \left({t}_{0}\right) = k L = k {\sum }_{i = 0}^{N - 1} \left(\sqrt{{x}^{2} + {\left(y-{y}_{0}-{Vt}_{i}\right)}^{2} + {h}^{2}}+\sqrt{{x}^{2} + {\left(y-{y}_{0}-{Vt}_{i + 1}\right)}^{2} + {h}^{2}}\right)$ (3) where the number of waves of the transmitted radar wave is k. Herein, tᵢ (i = 0, 1, ..., N) can be calculated from the following recurrence relation, and thus can be calculated based on t₀.
[Math 4] ${t}_{i + 1} = \frac{\left(cA\left({t}_{i}\right)-Vy′\right) + \sqrt{{\left(cA\left({t}_{i}\right)-Vy′\right)}^{2} - \left({c}^{2}-{V}^{2}\right) \left(A{\left({t}_{i}\right)}^{2}-y{′}^{2}-{b}^{2}\right)}}{{c}^{2} - {V}^{2}}$ (4) Herein, c denotes the speed of light. Herein, the following equations are provided:
[Math 5] $y ′ = y - {y}_{0}$ (5) [Math 6] $b = \sqrt{{x}^{2} + {h}^{2}}$ (6) [Math 7] $A ′ \left({t}_{i}\right) = {ct}_{i} + \sqrt{{\left({Vt}_{i}-y′\right)}^{2} + {b}^{2}}$ (7)

When the duration in which a particular observation point is irradiated with the radar wave is T and the irradiation period is -T/2 to T/2, the satellite 1 will receive, N times, the radar wave that has been reflected from the observation point continuously from time t₀ to time t_{N} while time t₀ and time t_{N} satisfy -T/2 ≤ t₀ ≤ T/2 and -T/2 ≤ t_{N} ≤ T/2.

Fig. 4 schematically illustrates the radar wave transmitted from the satellite 1 and the radar wave received after reflected i (i = 1, 2, ..., N) times from the observation point with reference to an example in a case of N = 5. Fig. 4 illustrates a state where the radar wave transmitted at time t^{u}₀ (u= 1, 2, 3) is reflected multiple times and received at time t^{u}₁, t^{u}₂, t^{u}₃, t^{u}₄, t^{u}₅. The transmission interval of the radar wave is denoted as τₚ, and the round-trip time between the satellite 1 and the observation point is denoted as τ. Note that the actually received radar wave corresponds to the sum of radar waves reflected from not only the intended observation point but also the whole area irradiated with the radar wave.

As illustrated in the reception profile of the radar wave transmitted at t²₀ in Fig. 4, while the radar wave 10 received after reflected once is extracted by an observation window in the conventional SAR technology, the radar wave 11 received after reflected N (= 5) times is extracted in the present invention. This is easily realized because t_{N} can be calculated from t₀. The time range of the window used for extraction of the radar wave transmitted at t²₀ is denoted as τ_{w}. At this time, the time range of the reflected wave from the irradiated area is also N (= 5)-fold. Thus, the difference in delay time at the point that is distant by Δx in the range direction is also N (= 5)-fold. Herein, the delay time Δt is expressed by Equation (8).
[Math 8] $\begin{matrix}Δ t = \frac{ϕ \left(x+Δx,y\right) - ϕ \left(x, y\right)}{kc} \\ = \frac{1}{c} {\sum }_{i = 0}^{N - 1} \left(\begin{matrix}\sqrt{{\left(x+Δ x\right)}^{2} + {\left(y-{y}_{0}-{Vt}_{i}\right)}^{2} + {h}^{2}} \\ + \sqrt{{\left(x+Δx\right)}^{2} + {\left(y-{y}_{0}-{Vt}_{i + 1}\right)}^{2} + {h}^{2}}\end{matrix}\right) \\ - \frac{1}{c} {\sum }_{i = 0}^{N - 1} \left(\sqrt{{x}^{2} + {\left(y-{y}_{0}-{Vt}_{i}\right)}^{2} + {h}^{2}}+\sqrt{{x}^{2} + {\left(y-{y}_{0}-{Vt}_{i + 1}\right)}^{2} + {h}^{2}}\right) \\ = \frac{1}{c} {\sum }_{i = 0}^{N - 1} \left\{\begin{matrix}\left(\begin{matrix}\sqrt{{\left(x+Δx\right)}^{2} + {\left(y-{y}_{0}-{Vt}_{i}\right)}^{2} + {h}^{2}} \\ - \sqrt{{x}^{2} + {\left(y-{y}_{0}-{Vt}_{i}\right)}^{2} + {h}^{2}}\end{matrix}\right) \\ + \left(\begin{matrix}\sqrt{{\left(x+Δx\right)}^{2} + {\left(y-{y}_{0}-{Vt}_{i + 1}\right)}^{2} + {h}^{2}} \\ - \sqrt{{x}^{2} + {\left(y-{y}_{0}-{Vt}_{i + 1}\right)}^{2} + {h}^{2}}\end{matrix}\right)\end{matrix}\right\} \\ = \frac{1}{c} {\sum }_{i = 0}^{N - 1} \left(\begin{matrix}\frac{x}{\sqrt{{x}^{2} + {\left(y-{y}_{0}-{Vt}_{i}\right)}^{2} + {h}^{2}}} Δ x \\ + \frac{x}{\sqrt{{x}^{2} + {\left(y-{y}_{0}-{Vt}_{i + i}\right)}^{2} + {h}^{2}}} Δ x\end{matrix}\right) \\ = \frac{1}{c} {\sum }_{i = 0}^{N - 1} \left(\begin{matrix}\frac{x}{\sqrt{{x}^{2} + {\left(y-{y}_{0}-{Vt}_{i}\right)}^{2} + {h}^{2}}} \\ + \frac{x}{\sqrt{{x}^{2} + {\left(y-{y}_{0}-{Vt}_{i + 1}\right)}^{2} + {h}^{2}}}\end{matrix}\right) Δ x\end{matrix}$ (8)

Herein, when approximation of tᵢ ≈ t₀ (i = 1, 2, ..., N-1) is applied, the following is obtained.
[Math 9] $\begin{matrix}Δ t = \frac{1}{c} {\sum }_{i = 0}^{N - 1} \left(\frac{x}{\sqrt{{x}^{2} + {\left(y-{y}_{0}-{Vt}_{0}\right)}^{2} + {h}^{2}}}+\frac{x}{\sqrt{{x}^{2} + {\left(y-{y}_{0}-{Vt}_{0}\right)}^{2} + {h}^{2}}}\right) Δ x \\ = \frac{1}{2} {\sum }_{i = 0}^{N - 1} \left(\frac{2 x}{\sqrt{{x}^{2} + {\left(y-{y}_{0}-{Vt}_{0}\right)}^{2} + {h}^{2}}}\right) Δ x = \frac{2 Nx}{c \sqrt{{x}^{2} + {\left(y-{y}_{0}-{Vt}_{0}\right)}^{2} + {h}^{2}}} Δ x\end{matrix}$ (9)

Since Δt of Equation (9) has been determined from the chirp rate of the chirp signal of the radar wave, Δx is expressed by Equation (10).
[Math 10] $Δ x = \frac{c \sqrt{{x}^{2} + {\left(y-{y}_{0}-{Vt}_{0}\right)}^{2} + {h}^{2}}}{2 Nx} Δ t$ (10)

It can be seen from the above that the resolution in the range direction is N times the resolution of the conventional SAR (corresponding to the case of N = 1).

This extracted radar wave also includes radar waves reflected from points other than the targeted observation point, as illustrated in Fig. 4. Further, the extracted radar wave includes the reflected waves 12 and 13 of the radar wave transmitted at different timings that are not generated in the conventional SAR technologies. However, these reflected waves from points other than the targeted observation point can be filtered and removed in the same manner as in the typical SAR technologies by using a profile of the change in the Doppler frequency or the change in the phase that is unique to the reflected wave from the targeted observation point. Specifically, this can be realized by generating a reference signal that reproduces a phase change of the radar wave received after N times of reflection from the targeted observation point and correlating the reference signal with the radar wave extracted as described above.

At this time, the Doppler instantaneous angular frequency with the phase delay φ(t₀) after the radar wave has been reflected N times is represented by Equation (11).
[Math 11] $\begin{matrix}\frac{dϕ \left({t}_{0}\right)}{d {t}_{0}} = \frac{d}{d {t}_{0}} k {\sum }_{i = 0}^{N - 1} \left(\sqrt{{x}^{2} + {\left(y-{y}_{0}-{Vt}_{i}\right)}^{2} + {h}^{2}}+\sqrt{{x}^{2} + {\left(y-{y}_{0}-{Vt}_{i + 1}\right)}^{2} + {h}^{2}}\right) \\ = \frac{d}{d {t}_{0}} k {\sum }_{i = 0}^{N - 1} \left(b+\frac{{\left(y′-{Vt}_{i}\right)}^{2}}{2 b}+b+\frac{{\left(y′-{Vt}_{i + 1}\right)}^{2}}{2 b}\right) \\ = k {\sum }_{i = 0}^{N - 1} \left(\frac{\left({Vt}_{i}-y′\right) V}{b}\frac{\partial {t}_{i}}{\partial {t}_{0}}+\frac{\left({Vt}_{i + 1}-y′\right) V}{b}\frac{\partial {t}_{i + 1}}{\partial {t}_{0}}\right)\end{matrix}$ (11)

Herein, the following approximation is used for evaluation.
[Math 12] $\frac{\partial {t}_{i}}{\partial {t}_{0}} \approx 1 \left(i=0,1,⋯,N-1\right)$ (12) Accordiingly, the following is established.
[Math 13] $\begin{matrix}\frac{dϕ \left({t}_{0}\right)}{d {t}_{0}} = k {\sum }_{i = 0}^{N - 1} \left(\frac{\left({Vt}_{i}-y′\right) V}{b}+\frac{\left({Vt}_{i + 1}-y′\right) V}{b}\right) \\ = \frac{k}{b} {\sum }_{i = 0}^{N - 1} \left({V}^{2}\left({t}_{i}+{t}_{i + 1}\right)-2y′V\right) \\ = \frac{k}{b} \left({\sum }_{i = 0}^{N - 1} {V}^{2} \left({t}_{i}+{t}_{i + 1}\right) - 2 Ny ′ V\right)\end{matrix}$ (13) Furthermore, when approximation of tᵢ ≈ t₀ (i = 1, 2, ..., N-1) is applied, the following is established.
[Math 14] $\frac{dϕ \left({t}_{0}\right)}{d {t}_{0}} = \frac{2 Nk}{b} \left({V}^{2}{t}_{0}-y′V\right)$ (14)

The instantaneous angular frequency of the typical SAR corresponds to a case of N = 1, and the following is established:
[Math 15] $\frac{dϕ \left({t}_{0}\right)}{d {t}_{0}} = \frac{2 k}{b} \left({V}^{2}{t}_{0}-y′V\right)$ (15) Thus, it can be seen that the instantaneous angular frequency of the present embodiment is N times the instantaneous angular frequency of the typical SAR.

It has been assumed so far that, when the radar wave is repeatedly transmitted N times to the targeted observation point, t₀ is the initial time of the repetition. While the satellite 1 travels in the azimuth direction, a series of observation data obtained from such N repetitions is linked to the time t₀ the satellite 1 initially transmits the radar wave. Hereafter, t₀ is denoted as t as the timing of observation being performed in the azimuth direction.

A reference signal r (t; x, y) for the targeted observation point (x, y) is generated as follows.
[Math 16] $r \left(t; x; y\right) = exp \left(jk\frac{N}{b}\left({V}^{2}{t}^{2}-2y′Vt\right)\right)$ (16)

On the other hand, when a reflected wave from a position offset from the targeted observation point by (Δx, Δy) is expressed by:
[Math 17] $S \left(t;x+Δx,y+Δy\right) = exp \left(jk\left(\frac{N}{b}\left({V}^{2}{t}^{2}-2\left(y′+Δy\right)Vt\right)\right)\right)$ (17) the correlation function φᵣₛ(τ) will be:
[Math 18] $\begin{matrix}{ϕ}_{rs} \left(τ\right) = {\int }_{- \frac{T}{2}}^{\frac{T}{2}} {r}^{∗} \left(t; x; y\right) S \left(t+τ;x+Δx,y+Δy\right) dt \\ = {\int }_{- \frac{T}{2}}^{\frac{T}{2}} exp \left(jk\left(\frac{N}{b}\left({V}^{2}\left(2tτ+{τ}^{2}\right)-2ΔyVt-2\left(y′+Δy\right)τ\right)\right)\right) dt \\ = exp \left(jk\frac{{NV}^{2}}{b}{τ}^{2}-2\left(y′+Δy\right)τ\right) {\int }_{- \frac{T}{2}}^{\frac{T}{2}} exp \left(jk\left(\frac{N}{b}\left({V}^{2}\left(2tτ\right)-2ΔyVt\right)\right)\right) dt \\ = exp \left(jk\frac{{NV}^{2}}{b}{τ}^{2}-2\left(y′+Δy\right)τ\right) {\int }_{- \frac{T}{2}}^{\frac{T}{2}} exp \left(jk\left(\frac{{NV}^{2}}{b}\left(2τ\right)-\frac{2 N}{b}ΔyV\right)t\right) dt \\ = B \left(τ\right) {\int }_{- \frac{T}{2}}^{\frac{T}{2}} exp \left(jkA\left(τ\right)t\right) dt\end{matrix}$ (18) Herein, the followings are assumed.
[Math 19] $A \left(τ\right) = \frac{{NV}^{2}}{b} \left(2τ\right) - \frac{2 N}{b} ΔyV$ (19)
[Math 20] $B \left(τ\right) = exp \left(jk\left(\frac{{NV}^{2}}{b}{τ}^{2}-2\left(y′+Δy\right)τ\right)\right)$ (20) Note that, although b varies with Δx in a strict sense, the quantity thereof is ignored as being negligible. B(τ) is a complex number having a magnitude of 1 and does not affect the magnitude of the correlation function. Therefore, the value of φ(τ) is expressed by:
[Math 21] $\begin{matrix}ϕ \left(τ\right) = T sinc \left(kA\left(τ\right)\frac{T}{2}\right) = T sinc \left(k\left(\frac{{NV}^{2}}{b}\left(2τ\right)-\frac{2 N}{b}Δy V\right)\frac{T}{2}\right) \\ = T sinc \left(\frac{kN}{2 b}T\left({V}^{2} 2τ-2ΔyV\right)\right) = Tsinc \left(\frac{{kNTV}^{2}}{b}\left(τ-\frac{Δ y}{V}\right)\right)\end{matrix}$ (21)

It can be seen from the above equation that the impact of the reflected wave from a point that is distant by Δy corresponds to a time difference of Δy/V in view of the correlation function. Thus, according to definition of resolution in Rayleigh criteria, a point at which the phase is shifted by π is identifiable. Thus, according to:
[Math 22] $\frac{{kNTV}^{2}}{b} \frac{Δ y}{V} = π$ (22) the following is the spatial resolution.
[Math 23] $Δ y = \frac{bπ}{kNTV} = \frac{λb}{2 NVT} = \frac{D}{2 N}$ (23)

Herein, D is the actual aperture length of the radar provided by Equation (24).
[Math 24] $D = \frac{λb}{VT}$ (24)

From Equation (23), the spatial resolution in accordance with the present invention is D/(2N). This is a resolution that is N times higher than the resolution D/2 provided by the typical SAR.

Note that, since the calculated value is the backscattering coefficient to the power of N, it is necessary to raise the calculated value to the power of 1/N for finding the true value of the backscattering coefficient.

Note that, although the case where radar waves are transmitted and received at a single satellite has been described in the above Example, the present invention is not limited thereto.

Further, the actual image generation can be processed inside a satellite or otherwise can be processed after data is transmitted to the ground, and this process may be carried out at any place and in any range.

Although the case where the moving unit is a satellite has been described in the above embodiment, the present invention is not limited to such an example. The moving unit may be an aircraft or may be a vehicle running on the ground.

Although Example 1 has been described in detail as examples of the embodiment of the present invention with reference to the drawings, the specific configuration is not limited to these examples, and various design modification or the like can be made within the scope not departing from the spirit of the present invention. Further, although microwaves are used for the communication between satellites, any electromagnetic waves capable of transmitting radar signals and having a Doppler effect during transmission can be used, for example, light may be used.

Although the process of extracting the correlation from the radar wave received at the satellite 1 at timings of generation of chirp signals is performed in Example 1, it is also possible to perform a process to transmit time-series data of the received radar wave and time-series data of timings of generation of chirp signals to the ground and extract the correlation on the ground.

Although the case where radar waves are transmitted and received at a single satellite has been described in Example 1, the present invention is not limited to such an example. An example using two satellites will be described below.

### [Example 2]

Fig. 5 is an illustration diagram illustrating the overall synthetic aperture radar system using a primary satellite 14 and a secondary satellite 15 according to Example 2 of the present embodiment. In Fig. 5, V₁ denotes the velocity of the primary satellite 14, and V₂ denotes the velocity of the secondary satellite 15. Fig. 6 is an internal configuration diagram of the primary satellite 14, and the primary satellite 14 includes the radar signal generation device 2, the radar wave transmission device 3, the radar wave transmission antenna 4, a radar signal receiving antenna 16, a radar signal receiving device 17, the radar signal amplifying device 7, the radar signal mixing device 8, the radar signal processing device 9, and the like. The radar signal receiving unit according to the present invention is formed of the radar signal receiving antenna 16 and the radar signal receiving device 17, and the radar wave transmission unit according to the present invention is formed of the radar wave transmission device 3 and the radar wave transmission antenna 4. Further, Fig. 7 is an internal configuration diagram of the secondary satellite 15 and includes the radar wave receiving antenna 5, the radar wave receiving device 6, a radar signal transmission device 18, the radar signal transmission antenna 19, and the like. The radar wave receiving unit according to the present invention is formed of the radar wave receiving antenna 5 and the radar wave receiving device 6, and the radar signal transmission unit according to the present invention is formed of the radar signal transmission device 18 and the radar signal transmission antenna 19.

Herein, as with Example 1, a radar wave is, for example, a high-frequency, high-power microwave with which the land surface is irradiated, and a radar signal means a signal to modulate a radar wave. A difference from Example 1 is in that a function of transmitting a radar signal with a low power microwave from the secondary satellite to the primary satellite is added.

The primary satellite 14 illustrated in Fig. 5 generates a radar signal by using a chirp signal generated at a predetermined timing by the radar signal generation device 2 illustrated in Fig. 6. Based on the generated radar signal, the radar wave transmission device 3 amplifies a microwave and generates a radar wave to irradiate the ground. The radar wave is transmitted from the radar wave transmission antenna 4. A change in the frequency occurs in the transmitted radar wave due to a Doppler effect.

The radar wave transmitted from the radar wave transmission antenna 4 of the primary satellite 14 is reflected at an observation point (on the ground) and received by the radar wave receiving antenna 5 illustrated in Fig. 7 of the secondary satellite 15 illustrated in Fig. 5. A change in the frequency due to a Doppler effect occurs at this time, the time of transmission, and also the time of reception. This change is the same as that in typical SAR observation. The received radar wave is down-converted by the radar wave receiving device 6, and a radar signal after reflected from the ground is extracted. The extracted radar signal is converted into a low power microwave by the radar signal transmission device 18, and the converted low power microwave is transmitted from the radar signal transmission antenna 19 to the primary satellite 14. The primary satellite 14 receives, by the radar signal receiving antenna 16, the radar signal transmitted from the secondary satellite 15 and extracts a radar signal by the radar signal receiving device 17. The extracted radar signal is amplified by the radar signal amplifying device 7. At the radar signal mixing device 8, the amplified radar signal is synthesized with the chirp signal of the radar signal generated by the radar signal generation device 2, and thereby a synthetic radar signal is generated. A radar wave up-converted and generated by the radar wave transmission device 3 based on the synthetic radar signal is transmitted from the radar wave transmission antenna 4. Further, the radar signal processing device 9 extracts a component reflected a predetermined number of times by using a timing the radar signal is generated by the radar signal generation device 2 from the radar signal extracted by the radar signal receiving device 17, converts the component into two-dimensional data, and reconstructs an image by using a reference signal generated based on the converted two-dimensional data and the generated chirp signal. It is possible to perform this reconstruction process at the radar signal processing device 9 inside the primary satellite 14 and then transmit the result thereof to the ground, or otherwise it is possible to transmit the received data to the ground and then perform the reconstruction process. In the latter case, the radar signal processing device 9 is installed on the ground.

In Example 2, two satellites are used, that is, a radar wave is transmitted from the primary satellite 14, a reflected wave from an observation point is received by the secondary satellite 15, and the signal is transmitted to the primary satellite 14. This is repeated N times, and thereby the same effect as that of Example 1 can be obtained. Note that the communication between the satellites is not required to have the same frequency as the radar wave, the reflected wave can be up-converted or down-converted at a satellite that receives the reflected wave so that the Doppler effect during relay is maintained, and thereby interference can be avoided.

The direction in which a high resolution is obtained due to a Doppler effect differs in accordance with the orbits of the primary satellite 14 and the secondary satellite 15. This makes it possible to obtain high resolution data due to a Doppler effect as two separate directional components by performing the process of Example 2 at the secondary satellite 15 while performing the process of Example 1 at the primary satellite 14. This enables generation of a two-dimensional image having a high resolution due to a Doppler effect. In two-dimensional image analysis, nonlinear processing may be required. The satellite that transmits a radar wave to the ground may be a static satellite. Further, although microwaves are used for the communication between the satellites, any electromagnetic waves capable of transmitting radar signals and having a Doppler effect during transmission can be used, for example, light may be used.

The synthetic aperture radar system of the present embodiment can expand the band of the microwave to irradiate or receive. This results in an advantage that the limitation of the resolution not exceeded by the conventional SAR technology can be exceeded. Further, when the secondary satellite 15 is used, the secondary satellite 15 transmits a signal (radar signal) having the same waveform generated by typical synthetic aperture radars to the primary satellite 14. Since it is sufficient to generate power for the radar signal to reach the primary satellite 14, a high-power transmission device that transmits radar waves to the land surface is unnecessary. This feature also characterizes the present embodiment and is important. Thus, there is also an advantage that the embodiment can be realized with smaller satellites of lower required power and relatively low costs. Further, a scheme to increase the SAR resolution with multiple times of observation using a plurality of satellites or a single satellite is known as "interference SAR". In the case of "interference SAR", however, the principle to improve the resolution relies on expanding the distance between radar wave antenna positions to equivalently expand the aperture length. Unlike this, the present invention is to improve the resolution by repeating multiple times of reflection in a short time to increase the round-trip distance of a radar wave and equivalently expand the frequency bandwidth, which differs from the interference SAR in the principle.

Although the case where the moving units are satellites has been described in the above embodiment, the present invention is not limited to such an example. The moving units may be aircrafts, and a similar synthetic aperture radar system can be implemented by using two aircrafts. Further, the plurality of moving units may be a satellite and an aircraft in combination. Furthermore, in the present invention, a moving unit may be a vehicle running on the ground, and the plurality of moving units may be a satellite or an aircraft and a vehicle in combination.

### [Industrial Applicability]

Since high-resolution images can be captured by repetition of reception and retransmission of reflected waves of radar waves that are transmitted above an observation region and reflected from an observation point, the present invention can be utilized in high-precision earth observation applications.

### [Reference Signs List]

- 1: satellite (moving unit)
- 2: radar signal generation device
- 3: radar wave transmission device (radar wave transmission unit)
- 4: radar wave transmission antenna (radar wave transmission unit)
- 5: radar wave receiving antenna (radar wave receiving unit)
- 6: radar wave receiving device (radar wave receiving unit)
- 7: radar signal amplifying device
- 8: radar signal mixing device
- 9: radar signal processing device
- 10: radar wave received after reflected once
- 11: radar wave received after reflected N (=5) times
- 12: extracted portion of a reflected wave of a radar wave transmitted earlier than an intended radar reflection
- 13: extracted portion of a reflected wave of a radar wave transmitted later than an intended radar reflection
- 14: primary satellite (moving unit)
- 15: secondary satellite (second moving unit)
- 16: radar signal receiving antenna (radar signal receiving unit)
- 17: radar signal receiving device (radar signal receiving unit)
- 18: radar signal transmission device (radar signal transmission unit)
- 19: radar signal transmission antenna (radar signal transmission unit)

## Claims

1. A synthetic aperture radar system comprising: a radar signal generation device; a radar wave transmission unit; a radar wave receiving unit; a radar signal amplifying device; a radar signal mixing device; and a radar signal processing device in a moving unit, the synthetic aperture radar system comprising:
the radar signal generation device configured to generate a radar signal at a predetermined timing;
the radar wave transmission unit configured to generate a radar wave based on the radar signal and irradiate a land surface with the generated radar wave;
the radar wave receiving unit configured to receive the radar wave transmitted from the radar wave transmission unit and reflected from the land surface and convert the received radar wave into a radar signal;
the radar signal amplifying device configured to amplify the converted radar signal;
the radar signal mixing device configured to mix the radar signal amplified by the radar signal amplifying device and the radar signal generated by the radar signal generation device to generate a synthetic radar signal; and
the radar signal processing device configured to generate image data related to a point scatterer on the land surface based on a further radar signal and the radar signal generated by the radar signal generation device, the further radar signal being based on the radar wave reflected multiple time at the land surface,
wherein the radar wave transmission unit generates the radar wave based on the synthetic radar signal generated by the radar signal mixing device and irradiates the land surface with the generated radar wave.

2. The synthetic aperture radar system according to claim 1,
wherein the radar wave receiving unit is provided to a second moving unit instead of the moving unit, the second moving unit being different from the moving unit,
wherein the second moving unit comprises a radar signal transmission device,
wherein the moving unit further comprises a radar signal receiving unit,
wherein the radar signal transmission device extracts a radar signal from a radar wave received by the radar wave receiving unit provided to the second moving unit and transmits the extracted radar signal to the moving unit,
wherein the radar signal receiving unit receives the radar signal transmitted from the second moving unit,
wherein the radar signal amplifying device amplifies the radar signal received by the radar signal receiving unit instead of amplifies the converted radar signal converted by the radar wave receiving unit provided to the moving unit, and
wherein the radar signal mixing device mixes a radar signal amplified by the radar signal amplifying device and a radar signal generated by the radar signal generation device to generate a synthetic radar signal.

3. The synthetic aperture radar system according to claim 1, wherein the radar signal processing device is provided to a ground facility installed on the ground instead of being provided to the moving unit.
